# EUROPEAN PATENT APPLICATION

(11) **EP 3 115 591 A1**
(43) Date of publication of application: **11.01.2017**
(21) Application number: 15757806.3
(22) Date of filing: 06.02.2015
(51) Int. Cl.: F02M 55/02, B23K 35/22, B23K 35/30, C22C 9/06

(54) **AUTOMOTIVE FUEL PIPELINE CONSTITUTED OF STAINLESS STEEL**

(30) Priority: 06.03.2014 JP 2014043534
(71) Applicant: Usui Kokusai Sangyo Kaisha Ltd., Shizuoka 411-8610 (JP)
(72) Inventor: SUGIYAMA Motoharu, Sunto-gun Shizuoka 411-8610 (JP); WATANABE Iyoshi, Sunto-gun Shizuoka 411-8610 (JP); MUROFUSHI Kengo, Sunto-gun Shizuoka 411-8610 (JP)
(74) Representative: Schmit, Christian Marcel Jean
(86) International application number: PCT/JP2015/053384
(87) International publication number: WO 2015/133222

(57) **Abstract**

Provided is a stainless steel automotive fuel pipe having a copper brazed part with excellent corrosion resistance. The fuel pipe is characterized in that a Cu-Ni brazing material containing 3 to 10% by weight of Ni is used as a copper brazing material for in-furnace brazing, and a nickel component of a diffusion layer positioned midway between a stainless-steel base material and the copper brazing material of a copper brazed part are in a state similar to that of the stainless-steel base material.

## Description

### Technical Field

The present invention relates to a pipe for supplying fuel to an engine in a gasoline direct-injection engine system and, in particular, the invention relates to an automotive fuel pipe made of stainless steel having various capabilities such as pressure resistance, air tightness, and corrosion resistance.

### Background Art

In the pipe for supplying fuel (pressure-feeding pipe) for use in the gasoline direct-injection engine system, products made by performing various plastic workings (such as pipe-end forming working and bending working) or joining working (such as brazing working) on a stainless-steel-based material have been most adopted as having specifications with the various capabilities such as pressure resistance, air tightness, and corrosion resistance. Of these, as a product made by performing a joining process and a brazing process on the stainless-steel-based material, for example, a fuel pressure-feeding pipe made of stainless steel has been known (see Patent Literatures 1 and 2). Conventionally, joining of components in this fuel pressure-feeding pipe made of stainless steel or the like has been generally performed by copper (Cu) brazing in an atmosphere furnace with hydrogen gas and nitrogen gas as a base or by high-frequency heating using hydrogen gas and nitrogen gas.

### Citation List

### Patent Literatures

PTL 1: Japanese Patent Application Laid-Open No. 2006-152852
PTL 2: Japanese Patent Application Laid-Open No. 2002-54534

### Summary of Invention

### Technical Problem

As described above, joining of the components in the fuel pressure-feeding pipe made of stainless steel or the like has been performed by copper brazing in an atmosphere furnace with hydrogen gas and nitrogen gas as a base or by high-frequency heating using hydrogen gas and nitrogen gas. In this regard, when the copper brazing is performed in an atmosphere furnace with hydrogen gas and the nitrogen gas as a base or by high-frequency heating using hydrogen gas and nitrogen gas, a mutual diffusion layer made of copper and stainless steel (hereinafter referred to as a "diffusion layer" for convenience of description) is generated by heating midway between copper braze and a stainless-steel base material. In this diffusion layer, since a nickel component of the stainless-steel base material elutes (diffuses) into copper braze, the nickel component becomes to run short, and thus corrosion resistance tends to decrease. With this, in the stainless-steel fuel pipe, the stainless-steel base material and a copper brazing material do not corrode, and corrosion occurs in a concentrated manner only to the diffusion layer positioned midway between the stainless-steel base material and the copper brazing material of the copper brazed part, posing a problem of a decrease in corrosion resistance of the brazed part.

The present invention was made to solve the problem of the conventional technology, that is, the problem that, in manufacturing a pipe made of stainless steel for supplying fuel to an engine in a gasoline direct-injection engine system, corrosion occurs in a concentrated manner only to the diffusion layer positioned midway between the stainless-steel base material and the copper brazing material of the copper brazing part, thereby decreasing corrosion resistance of the brazed part and impairing a brazing performance. The present invention is to provide a stainless-steel automotive fuel pipe without elusion of nickel included in the stainless-steel base material into copper braze during brazing in a furnace and capable of preventing a decrease of nickel and keeping corrosion resistance of the diffusion layer.

### Solution to Problems

The automotive fuel pipe made of stainless steel according to the present invention is a stainless steel pipe for supplying fuel to an engine in a gasoline direct-injection engine system, wherein a Cu-Ni brazing material containing 3 to 10% by weight of Ni is used as a copper brazing material for in-furnace brazing, and a nickel component of a diffusion layer positioned midway between a stainless-steel base material and the copper brazing material of a copper brazed part are in a state similar to that of the stainless-steel base material. Also, as the Cu-Ni brazing material, a Cu-Ni alloy wire or a Cu-Ni paste with a Cu paste and a Ni paste mixed together may be used.

### Advantageous Effects of Invention

In the present invention, a Cu-Ni brazing material containing 3 to 10% of Ni is used as a copper brazing material for in-furnace brazing of the stainless steel automotive fuel pipe to include a nickel component in the copper brazing material in advance, and nickel contained in the stainless-steel base material does not thus elute into the copper brazing material, so that a drop in the amount of the nickel component can be prevented. Therefore, the invention can achieve excellent effects that a decrease in corrosion resistance of the diffusion layer can be prevented, a stainless steel automotive fuel pipe having a copper brazed part excellent in corrosion resistance can be obtained, and reliability of the gasoline direct-injection engine system can be greatly enhanced.

### Brief Description of Drawings

Figure 1 is an external view of main parts depicting one embodiment of a stainless steel automotive fuel pipe of the present invention.
Figure 2 is an enlarged sectional view depicting the main parts of the fuel pipe depicted in Figure 1.

### Description of Embodiment

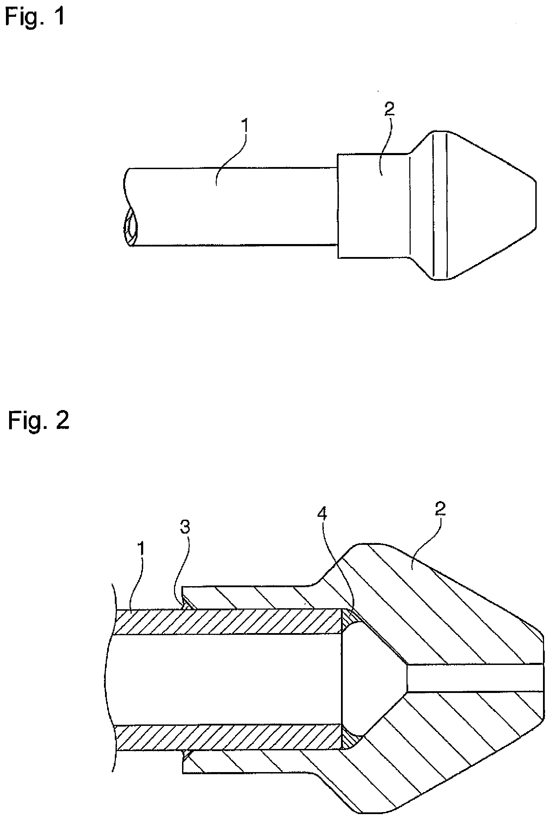

Figures 1 and 2 exemplarily depict a fuel pipe for use in a high-pressure fuel passage connecting between a high-pressure fuel pump and a fuel rail and between the fuel rail and an injector in a fuel supply apparatus for a direct-injection-type engine. The fuel pipe is configured by brazing, to an end of a stainless-steel pipe 1, a terminal component (nipple) 2 configuring a connection head to be in contact with a counterpart pipe component (omitted in the drawings). 3 denotes a brazed part between an outer surface of the stainless-steel pipe 1 and an opening end of the terminal component 2, and 4 denotes a brazed part between a terminal end of the stainless-steel pipe 1 and an inner surface of the terminal component 2. In the present invention, as a copper brazing material for use to join the stainless-steel pipe 1 and the terminal component 2 in the fuel pipe, a Cu-Ni brazing material containing 3 to 10% by weight of nickel is used.

In the present invention, a Cu-Ni brazing material containing 3 to 10% of Ni is used as a copper brazing material for in-furnace brazing of the stainless steel fuel pipe because of the following reason.

That is, in the case of a normal copper brazing material not containing Ni, nickel contained in the stainless-steel base material elutes into copper braze at the time of in-furnace brazing as described above. Therefore, a nickel component of the diffusion layer of copper and stainless steel generated midway between the copper braze and the stainless-steel base material becomes insufficient, and corrosion resistance tends to decrease. With this, in the stainless steel fuel pipe, the diffusion layer positioned midway between the stainless-steel base material and the copper brazing material of the copper brazed part is corroded with priority, and corrosion resistance of the brazed part decreases. To solve this problem, as a method of preventing elution of nickel from the stainless-steel base material into the copper brazing material, the present invention adopts means such that nickel is mixed in advance in the copper brazing material.

With the use of the copper brazing material containing Ni as a copper brazing material for in-furnace brazing of the stainless steel fuel pipe, since nickel contained in advance in the brazing material is already present as eluting when the Cu-Ni brazing material is heated in an in-furnace brazing furnace to elute into the joining part, nickel in the stainless-steel base material does not elute into the copper brazing material, and a decrease in nickel in the stainless-steel base material is thus prevented. As a result, a decrease in corrosion resistance of the diffusion layer positioned midway between the stainless-steel base material and the copper brazing material of the copper brazed part can be prevented.

In this regard, the nickel content of the Cu-Ni brazing material for in-furnace brazing of the present invention is restricted to 3 to 10% by weight because sufficient preventive effect on elution of nickel from the stainless-steel base material into the copper brazing material cannot be obtained if the content is less than 3% by weight and, on the other hand, if the content exceeds 10% by weight, the melting point of the brazing material becomes 1140 °C or higher, thereby making it difficult to perform work in a continuous furnace.

Note that as brazing materials for brazing for stainless steel, those including Cr, Fe, Mn, Al, Si, P, and Boron (B) other than Cu and Ni have been known, however, it goes without saying that these brazing materials are different from a copper brazing material (Cu-Ni brazing material containing 3 to 10 by weight of Ni) for in-furnace brazing of the stainless steel fuel pipe of the present invention.

### Examples

The present invention is more specifically described based on examples as below. In this regard, the present invention is not restricted by the following examples, and modifications and implementations within a range not deviating from the gist of the invention are all included in the technical scope of the present invention.

In the examples, regarding effects exhibited by the Cu-Ni brazing material of the stainless steel fuel pipe for connecting between the high-pressure fuel pump and the fuel rail of the fuel supply apparatus for the direct-injection-type engine depicted in Figures 1 and 2 when the stainless-steel pipe 1 and the nipple 2 are subjected to in-furnace brazing, component analyses of the brazed part and corrosion resistance tests with respect to corrosion-resistant fuel were performed, and corrosion conditions (corrosion resistance) were observed visually and by a microscope for judgement.

### [Examples 1 to 4]

Using a stainless-steel pipe material having an outer diameter of 8 mm and a thickness of 1.2 mm (SUS304) as a pipe base material, a nipple for the 8-mm pipe (SUS304), and Cu-Ni brazing materials shown in Table 1, brazing was performed in a continuous brazing furnace in which heating is performed by heat of radiation from a furnace wall, to produce a stainless-steel fuel pipe. The in-furnace temperature at the time of brazing in the examples was 1108 to 1140 °C, and the work moving speed was 250 mm/min. In the examples, a Cu-Ni paste made by adding a Ni paste to a Cu paste was used as a Cu-Ni brazing material.

Corrosion conditions of the brazed part (brazed part 3 of the pipe depicted in Figure 1 and Figure 2) of the stainless steel fuel pipe and the amount of a nickel component of the diffusion layer in the examples are shown in Table 2. The corrosion conditions of the brazed part were determined by checking corrosion conditions of the diffusion layer positioned midway between the stainless-steel base material and the copper brazing material of the brazed part based on a CCT test (cyclic corrosion test). Also, the amount of a nickel component of the diffusion layer was measured by a component analysis of the brazed part.

As evident from the results shown in Table 2, in any of the stainless steel fuel pipe of Examples 1 to 4 in which the Cu-Ni brazing materials containing 3 to 10% by weight of nickel was used, an increase in nickel concentration was confirmed in the diffusion layer positioned midway between the stainless-steel base material and the copper brazing material of the brazed part, and corrosion was not confirmed in the brazed part. In addition, the amount of elution of nickel components from the stainless-steel base material was hardly confirmed.

### [Comparative examples 1 and 2]

A stainless-steel pipe material having an outer diameter of 8 mm and a thickness of 1.2 mm (SUS304) and a nipple (SUS304) were used as with Examples 1 to 4, Cu-Ni brazing materials with a Ni content out of the specified values of the present invention was used, and brazing was performed in the same continuous brazing furnace as that of Examples 1 to 4 at an in-furnace temperature of 1090 to 1098 °C and a work moving speed of 250 mm/min to produce a stainless steel fuel pipe. Corrosion conditions of a brazed part of the produced fuel pipe and the amount of a nickel component of the diffusion layer are also shown in Table 2. Note that the corrosion conditions of the brazed part were determined by the same method as that of Examples 1 to 4. In addition, the same goes for the amount of nickel components of the diffusion layer.

As evident from the results shown in Table 2, in the case of any of the stainless steel fuel pipe obtained from brazing by using the Cu-Ni brazing material with the Ni content out of the specified values of the present invention, since the amount of nickel component in the diffusion layer positioned midway between the stainless-steel base material and the copper brazing material of the brazed part was small, corrosion was confirmed in the brazed part, which was therefore of inferior corrosion resistance. Thus, it is difficult to adopt these comparative examples as a fuel pipe.

### [Conventional example]

A stainless-steel pipe material having an outer diameter of 8 mm and a thickness of 1.2 mm (SUS304) and a nipple (SUS304) were used as with Examples 1 to 4, a Cu brazing material not containing Ni was used, and brazing was performed in the same continuous brazing furnace as that of Examples 1 to 4 at an in-furnace temperature of 1083 °C and a work moving speed of 250 mm/min to produce a stainless steel fuel pipe Corrosion conditions of a brazed part 3 and the amount of a nickel component of the diffusion layer are also shown in Table 2. Note that the corrosion conditions of the brazed part were determined by the same method as that of Examples 1 to 4. In addition, the same goes for the amount of nickel components of the diffusion layer.

As evident from the results shown in Table 2, in the case of the stainless steel fuel pipe obtained from brazing by using the Cu brazing material not containing Ni, it was confirmed that the stainless-steel base material and the copper brazing material portion do not corrode and corrosion occurs in a concentrated manner only to the diffusion layer positioned midway between the stainless-steel base material and the copper brazing material of the copper brazed part. A factor responsible for this can be thought such that since the nickel component of the stainless-steel base material elutes into the copper braze, the nickel component of the diffusion layer runs short to decrease corrosion resistance.

**[Table 1]**

| Sample No. | Copper (% by weight) | Nickel (% by weight) |
|---|---|---|
| Example 1 | 97 | 3.0 |
| Example 2 | 95 | 5.0 |
| Example 3 | 92 | 8.0 |
| Example 4 | 90 | 10.0 |
| Comparative example 1 | 99 | 1.0 |
| Comparative example 2 | 98 | 2.0 |
| Conventional example | 100 | 0.0 |

**[Table 2]**

| Sample No. | Copper brazing material | | In-furnace temperature | Diffusion layer of brazed part | | | |
|---|---|---|---|---|---|---|---|
| | Type | Ni content | | Layer thickness | Ni concentration | CCT test result | Amount of elution of Ni component |
| | | (% by weight) | (C°) | (µm) | (% by weight) | | (%) |
| Example 1 | Cu-Ni brazing material | 3.0 | 1108 | 9.3 | 8.0 | ○ | 0.0 |
| Example 2 | Cu-Ni brazing material | 5.0 | 1120 | 6.4 | 13.3 | ○ | -5.3 |
| Example 3 | Cu-Ni brazing material | 8.0 | 1133 | 6.1 | 16.4 | ○ | -8.4 |
| Example 4 | Cu-Ni brazing material | 10.0 | 1140 | 5.7 | 19.4 | ○ | -11.4 |
| Comparative example 1 | Cu-Ni brazing material | 1.0 | 1090 | 15.7 | 2.5 | × | 5.5 |
| Comparative example 2 | Cu-Ni brazing material | 2.0 | 1098 | 15.0 | 1.6 | 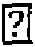 | 6.4 |
| Conventional example | Cu brazing material | 0.0 | 1083 | 14.3 | 0.7 | × | 7.3 |

| | | | | | | | |
|---|---|---|---|---|---|---|---|
| CCT test result ○: Without corrosion 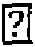 : With slight corrosion ×: With corrosion | | | | | | | |

### Reference Signs List

- 1: stainless-steel pipe
- 2: terminal component (nipple)
- 3, 4: brazed part

## Claims

1. A stainless steel automotive fuel pipe for supplying fuel to an engine in a gasoline direct-injection engine system, wherein a Cu-Ni brazing material containing 3 to 10% by weight of Ni is used as a copper brazing material for in-furnace brazing, and a nickel component of a diffusion layer positioned midway between a stainless-steel base material and the copper brazing material of a copper brazed part are in a state similar to that of the stainless-steel base material.

2. The stainless steel automotive fuel pipe according to claim 1, wherein
as the Cu-Ni brazing material, a Cu-Ni alloy wire or a Cu-Ni paste with a Cu paste and a Ni paste mixed is used.
